(19) Europäisches Patentamt
European Patent Office
Office européen des brevets

(11) Veröffentlichungsnummer: **0 115 635**
**B2**

(12) **NEUE EUROPÄISCHE PATENTSCHRIFT**

(45) Veröffentlichungstag der neuen Patentschrift: **01.08.90**

(51) Int. Cl.$^5$: **C 08 F 10/10**, C 08 F 2/04

(21) Anmeldenummer: **83113135.4**

(22) Anmeldetag: **27.12.83**

(54) **Verfahren zur kontinuierlichen Herstellung von Isobutylenpolymerisaten.**

(30) Priorität: **05.01.83 DE 3300155**

(43) Veröffentlichungstag der Anmeldung:
**15.08.84 Patentblatt 84/33**

(45) Bekanntmachung des Hinweises auf die Patenterteilung:
**05.03.86 Patentblatt 86/10**

(45) Bekanntmachung des Hinweises auf die Entscheidung über den Einspruch:
**01.08.90 Patentblatt 90/31**

(84) Benannte Vertragsstaaten:
**AT BE DE FR GB IT NL**

(56) Entgegenhaltungen:

| | |
|---|---|
| EP-A-0 025 530 | US-A-2 533 058 |
| EP-A-0 048 627 | US-A-2 561 226 |
| EP-B-0 001 186 | US-A-2 772 255 |
| GB-A-1 157 043 | US-A-3 033 836 |
| US-A-2 405 480 | US-A-3 129 205 |
| US-A-2 491 710 | US-A-3 555 890 |
| | US-A-4 151 113 |

(73) Patentinhaber: **BASF Aktiengesellschaft**
**Carl-Bosch-Strasse 38**
**D-6700 Ludwigshafen (DE)**

(72) Erfinder: **Bronstert, Klaus, Dr.**
**Gartenstrasse 26**
**D-6719 Carlsberg (DE)**
Erfinder: **Nickl, Johann, Dr.**
**Paray-le-Monial-Strasse 9**
**D-6702 Bad Duerkheim (DE)**
Erfinder: **Krause, Hans-Joachim, Dr.**
**Pariser Strasse 31**
**D-6700 Ludwigshafen (DE)**
Erfinder: **Schmitt, Werner**
**Ludwigshafener Strasse 21b**
**D-6710 Frankenthal (DE)**

EP 0 115 635 B2

Courier Press, Leamington Spa, England.

**Beschreibung**

Die Erfindung betrifft ein Verfahren zur kontinuierlichen Herstellung von Isobutylenpolymerisaten mit Molgewichten $\overline{M}_w$ von 9.500 bis 120.000 durch Homopolymerisation von Isobutylen oder Copolymerisaten von Isobutylen mit Isobutylen copolymerisierbaren Verbindungen in aliphatischen $C_3$- bis $C_6$-Kohlenwasserstoffen als Lösungsmittel in Gegenwart von jeweils 0,001 bis 0,1 Gew.%, bezogen auf das Gewicht der Monomeren, eines im Lösungsmittel löslichen kationischen Polymerisationsinitiators und Coinitiators bei Temperaturen von −40 bis 40°C und Drücken von 0,01 bis 10 bar unter Luft- und Feuchtigkeitsausschluß, wobei die bei der Polymerisation verdampften Lösungsmittel und Monomere kontinuierlich abgezogen, durch Kühlung verflüssigt und in flüssigem Zustand als Rückfluß erneut der Polymerisationszone zugeführt werden.

Bei derartigen Polymerisationsverfahren zur Herstellung von Homo- oder Copolymerisaten des Isobutylens ist es erforderlich, die Polymerisation in Gegenwart von Polymerisationsinitiatoren in leicht flüchtigen organischen Lösungsmitteln durchzuführen und die bei der Polymerisationsreaktion entstandene Polymerisationswärme durch Verdampfen des Lösungsmittels abzuführen.

Es ist bekannt, zur Erfüllung dieser Erfordernisse die Polymerisation des Isobutylens mit Friedel-Crafts-Verbindungen als Initiatoren in Gang zu setzen und zur Abführung der Reaktionswärme in Gegenwart eines niedrigsiedenden inerten Lösungsmittels, das unter Reaktionsbedingungen verdampft, zu polymerisieren. Das verdampfte Lösungsmittel wird nach den bekannten Verfahren kontinuierlich abgezogen, verflüssigt und in flüssigem Zustand als Rückfluß erneut der Polymerisationszone zugeführt (vgl. US-Patente 29 06 793 und 31 29 205). Es ist auch bekannt, die Homo- und Copolymerisation des Isobutylens in Gegenwart von aliphatischen Kohlenwasserstoffen oder Alkylhalogeniden als Lösungsmittel mit Hilfe kationischer Polymerisationsinitiatoren durchzuführen (vgl. US—Patente 27 72 255, 30 33 836 und 34 55 890). Hierzu wird die Lösung eines Friedel-Crafts-Initiators in einem $C_1$- bis $C_3$-Alkylhalogenid der gekühlten Lösung des Isobutylens unter Rühren der Reaktionsmischung zugegeben (vgl. US—Patent 34 55 890). Es ist auch bereits bekannt, einen in aliphatischen Kohlenwasserstoffen löslichen Polymerisationsinitiator zusammen mit einem Coinitiator zur Homo- oder Copolymerisation des Isobutylens einzusetzen (vgl. US—Patent 4 151 113 und EP—Al 48 627 und 1 186). Der Initiator besteht dabei insbesondere aus Ethylaluminiumdichlorid, der Coinitiator aus tert-Butylchlorid und das Lösungsmittel aus einem niedrigsiedenden aliphatischen Kohlenwasserstoff.

Die bekannten Verfahren zur Homo- oder Copolymerisation des Isobutylen weisen aber den Nachteil auf, daß zur sicheren Reaktionsführung neben anderen besonderen Maßnahmen das Reaktionsgut in der Polymerisationszone gerührt werden muß. Dazu sind Rührelemente in der Apparatur erforderlich. Außerdem wird ein Produkt erhalten, das ein Gemisch aus Polymerisaten mit sehr unterschiedlichen Polymerisationsgraden ist und das bei einer bestimmten Temperatur im Bereich von −40 bis 40°C ein relativ niedriges mittleres Molekulargewicht aufweist. Ferner werden meistens relativ hohe initiatorkonzentrationen eingesetzt, was zu einem mit erheblichen Mengen am initiator verunreinigtem Isobutylenpolymerisat führt. Die bekannten Verfahren haben auch den Nachteil, daß stets eine geringe Raum-/Zeitausbeute erreichbar ist. Eine Erhöhung dieser Ausbeute könnte zwar durch eine Erhöhung der Polymerisationsinitiatorkonzentration erreicht werden, das anfallende Isobutylenpolymerisat wäre aber mit Initiator stark verunreinigt und eine sichere Reaktionsführung wäre erschwert. Ein weiterer Nachteil der bekannten Verfahren ist die große Menge an reaktionsfähigen Monomeren in den Polymerisationsreaktoren, womit ein erhebliches Sicherheitsrisiko verbunden ist.

Der Erfindung liegt die Aufgabe zugrunde, ein kontinuierliches Verfahren zur Homo- oder Copolymerisation von Isobutylen aufzufinden, ohne daß die oben erwähnten Nachteile auftreten. Eine weitere Aufgabe der vorliegenden Erfindung besteht darin, ein homogenes und weitgehend von Initiatoren freies Isobutylenpolymerisat nach wirtschaftlich einfacher und sicherer Verfahrensweise herzustellen.

Diese Aufgaben werden erfindungsgemäß dadurch gelöst, daß man die Flüssigkeitsströme aus Monomerlösung, die 40 bis 95 Gew.% der Monomeren enthält. Rückfluß, Coinitiatorlösung und getrennt davon der Strom aus Initiatorlösung zusammenführt in eine Mischzone, die sich in der Polymerisations- und ersten Zone befindet und in welcher die polymerisierende Mischung frei nach unten fließt auf eine mit Schaum bedeckte Oberfläche einer zweiten Zone, wobei in der Schaumschicht, die noch zur ersten Zone gehört, die in Kontakt gebrachten Reaktionssteilnehmer ausreagieren, wobei die Zusammenführung und die Vermischung ohne Rührung und die Wärmeabfuhr durch Siedekühlung erfolgt, wobei die entstandene Polymerlösung in der zweiten Zone, die sich vertikal unter der ersten Zone befindet, gesammelt und wobei zum Schluß kontinuierlich durch die zweite Zone nach unten abgezogen wird.

Nach bevorzugter Verfahrensweise werden die Flüssigkeitsströme aus Monomerlösung, Coinitiatorlösung und Rückfluß auch getrennt voneinander der ersten Zone zugeführt. Nach besonders bevorzugtem Verfahren enthält die Monomerlösung 50 bis 85 Gewichtsprozent der Monomeren.

Verfahren zur Herstellung von Isobutylenpolymerisaten durch Homo- oder Copolymerisation von Isobutylen sind an sich seit geraumer Zeit bekannt und beispielsweise in den eingangs zitierten Literaturstellen ausführlich beschrieben. Als mit Isobutylen kationisch copolymerisierbare Verbindungen kommen insbesondere Buten-1, Isobuten, 4-Methylpenten-1, Octen-1, 2-Methylbuten-1, Styrol, alkylsubstituierte Styrole wie α-Methylstyrol und andere Vinylverbindungen wie Propylen, Isopenten, Vinylether, halogensubstituierte Styrole wie p-Chlorstyrol in Betracht. Zur kationisch initiierten

Copolymerisation mit Isobutylen gemäß vorliegenden Verfahren sind beispielsweise auch Diolefine oder Cyclodiolefine wie Butadien, Isopren, Cyclopentadien, Vinylnorbornen oder β-Pinen geeignet. Eine ausführliche Aufzählung der mit Isobutylen kationisch copolymerisierbaren Comonomeren ist in dem eingangs zitiertem US—Patent 34 55 890 enthalten, so daß sich eine weitere Beschreibung erübrigt. Die erhaltenen Copolymerisate des Isobutylens enthalten gewöhnlich 0,1 bis 50, bevorzugt 0,5 bis 25 Gewichtsprozent Comonomere einpolymerisiert, es können aber auch größere Mengen an Comonomeren im Copolymerisat enthalten sein. Bevorzugt ist das erfindungsgemäße Verfahren auf die kontinuierliche Homopolymerisation von Isobutylen zu Polyisobutylen beschränkt. Die anmeldungsgemäß erhaltenen Polyisobutylene weisen die Formel:

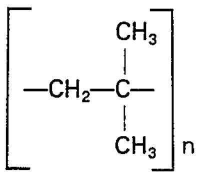

auf. wobei n = 170 bis 2 100, bevorzugt 450 bis 1 600. Die obiger Polyisobutylene mit Molgewichten aus dem Gewichtsmittel $M_w$ von 9 500 bis 120 000 bevorzugt von 25 000 bis 90 000, bestimmt nach Gelpermeationschromatographie, sind bei Raumtemperatur zähfließende, klebrige und transparente Massen mit Dichten von 0,92 bis 0,93 $g/cm^3$ nach DIN 53 479, die vielfältige Verwendung als Dichtungsmassen, Haftkleber oder als Viskositätsindexverbesserer in Motorölen Verwendung finden können. Die Homo- oder Copolymerisation des Isobutylens wird in Lösung vorgenommen, wobei als Lösungsmittel aliphatische $C_3$- bis $C_6$-Kohlenwasserstoffe verwendet werden. Besonders geeignet als Lösungsmittel sind n-Butan, iso-Butan oder ein n-Butan/-iso-Butan-Gemisch, das 10 bis 50 Volumenteile n-Butan enthält. Ein geeignetes Lösungsmittel für den Polymerisationsinitiator ist beispielsweise n-Hexan oder n-Butan. Die Wahl des Lösungsmittel ist von der Temperatur abhängig, bei der die Polymerisation vorgenommen wird. Bei tiefer Temperatur ist der Einsatz von Propan möglich. Die in Betracht kommenden organischen Lösungsmittel sind wasserfrei und ggf. gereinigt.

Die Homo- oder Copolymerisation des Isobutylens wird in Gegenwart von jeweils 0,001 bis 0,1, bevorzugt 0,002 bis 0,007 Gewichtsprozent, bezogen auf das Gewicht der zu polymerisierenden Monomeren, eines in obigen Lösungsmiteln löslichen kationischen Polymerisationsinitiators und Coinitiators durchgeführt. Ganz besonders vorteilhaft ist auch ein Einsatz von nur jeweils 0,001 bis 0,002 Gewichtsprozent Initiator und Coinitiator. Als Polymerisationinitiatoren die in den $C_3$- bis $C_6$-Kohlenwasserstoffen löslich sind, kommen insbesondere die für die Polymerisation von Isobutylen an sich bekannten Verbindungen der allgemeinen Formel $RAlX_2$ oder $R_2AlX$ in Betracht, worin R ein $C_1$-bis $C_7$-Alkylradikal und X ein gleiches oder vorschiedenartiges Halogen aus der Gruppe Chlor oder Brom ist (vgl. US—Patent 4 151 113). Besonders geeignet sind die Verbindungen: Ethylaluminiumdichlorid ($C_2H_5AlCl_2$), Isobutylaluminiumdichlorid oder Ethylaluminiumdibromid. Als Coinitiatoren kommen die bekannten Coinitiatoren R—Y in Betracht, wobei R= ein $C_3$- bis $C_6$-Kohlenwasserstoff und Y = Chlor oder Brom (vgl. EP—A—11 186 und 48 627). Als Coinitiatoren geeignete Verbindungen sind beispielsweise das tert.-Butylchlorid (t-BuCl), tert.-Butylbromid, tert.-Amylchlorid oder Benzylchlorid zu nennen. Die kationischen Polymerisationsinitatoren sind bekanntlich Polymerisationskatalysatoren, die nach einem kationischen Polymerisationsmechanismus das Isobutylen bzw. ein Gemisch aus Isobutylen mit anderen copolymerisierbaren Monomeren zu polymerisieren vermögen. Nach den ionischen Polymerisationsmechanismen lassen sich besonders regelmäßig gebaute Polymerisate herstellen.

Die Homo- oder Copolymerisation des Isobutylens wird bei Temperaturen von −40 bis +40° bevorzugt −25 bis +10°C und bei Drücken von 0,01 bis 10, bevorzugt 0.1 bis 3,0 bar vorgenommen. Besonders geeignet ist ein Temperaturbereich von −20 bis +7°C und ein Druck von 500 bis 1 020 mbar. Die Herstellung der Isobutylenpolymerisate wird unter strengem Ausschluß von Luftsauerstoff und von Feuchtigkeit durchgeführt. Hierzu kann man trockenes und sauerstoffreies Inertgas, insbesondere Stickstoff, in das Polymerisationssystem einführen und die verwendeten Lösungsmittel und Monomere vor dem Einbringen in die Polymerisationszone mit Hilfe eines Molekularsiebs oder anderer Trocknungsmittel von mitgeführten und gelösten Feuchtigkeitsspuren befreien.

Die bei der Homo- oder Copolymerisation des Isobutylen durch die entstehende Polymerisationswärme verdampften Lösungsmittel und Monomere werden kontinuierlich aus der Polymerisationszone abgezogen, durch Kühlung verflüssigt und in flüssigem Zustand als sog. Rückfluß erneut der Polymerisationszone zugeführt. Hierbi übernehmen die leichtsiedenden Lösungsmittel wie n-Butan oder iso-Butan sowie das Monomere die Wärmeabfuhr aus der Polymerisationszone während der Polymerisation. Das Prinzip der Siedekühlung ist bekannt und beispielsweise in den eingangs zitierten Druckschriften, den US—Patenten 2 506 793, 31 292 205, 2 772 255, 3 033 836 und 3 455 890 beschrieben, so daß sich eine weitere Erläuterung an dieser Stelle erübrigt. Nach erfindungsgemäßen Verfahren wird das Reaktionsgemisch in der Polymerisationszone nicht gerührt, die entstandene Polymerisationswärme muß auch nicht über die Außenwandungen durch Kühlung abgeführt werden.

Erfindungsgemäß werden die Flüssigkeitsströme aus Monomerlösung, die 40 bis 95 Gew.% der Monomeren enthält. Rückfluß, Coinitiatorlösung und getrennt davon der Strom aus Initiatorlösung

zusammenführt in eine Mischzone, die sich in der Polymerisations- und ersten Zone befindet und in welcher die polymerisierende Mischung frei nach unten fließt auf eine mit Schaum bedeckte Oberfläche einer zweiten Zone, wobei in der Schaumschicht, die noch zur ersten Zone gehört, die in Kontakt gebrachten Reaktionsteilnehmer ausreagieren, wobei die Zusammenführung und die Vermischung ohne Rührung und die Wärmeabfuhr durch Siedekühlung erfolgt, wobei die entstandene Polymerlösung in der zweiten Zone, die sich vertikal unter der ersten Zone befindet, gesammelt und wobei zum Schluß kontinuierlich durch die zweite Zone nach unten abgezogen wird.

Die Lösung des oder der Monomeren in den obengenannten aliphatischen $C_3$- bis $C_6$-Kohlenwasserstoffen soll 40 bis 95, bevorzugt 50 bis 85 und insbesondere 60 bis 80 Gewichtsprozent der Monomeren enthalten. Der Rückfluß besteht aus den kondensierten Anteilen des verdampften Monomeren und Lösungsmittel und fließt von einem Siedekühler üblicher Art in die Polymerisationszone der ersten Zone zurück. Die Menge des Rückflusses ist abhängig von der Initiatormenge, Temperatur der Polymerisation und von der Monomerzusammensetzung und beträgt gewöhnich das 1- bis 3-fache, bezogen auf die Flüssigkeitsmenge der Monomerlösung. Um eine gute Dosierbarkeit zu gewährleisten, ist der Initiator und der Coinitiator zweckmäßig in einem Lösungsmittel gelöst. Die Coinitiatorlösung, die aus einem Gewichtsteil Coinitiator und 10 bis 250 Gewichtsteilen Lösungsmittel besteht, ist im Verhältnis zur Monomerlösung gering, im allgemeinen beträgt der Anteil dieser Lösung, bezogen auf die Flüssigkeitsmenge der Monomerlösung, 0,01—10 Gewichtsprozent. Ein wesentliches Merkmal der Erfindung besteht darin, daß die Polymerisationsinitiator enthaltende Lösung getrennt von den anderen Flüssigkeitsströmen der Polymerisationszone zugeführt wird. Nach bevorzugtem Verfahren können auch die Flüssigkeitsströme aus Monomerlösung, Coinitiatorlösung und Rückfluß getrennt von einander, und jeweils getrennt von der Initiatorlösung, der Mischzone zugeführt werden. Die Initiatorlösung, die aus einem Gewichtsteil Initiator und 10 bis 400 Gewichtsteilen Lösungsmittel besteht, wird der Mischzone in Mengen von 0,01 bis 15 Gewichtsprozent, bezogen auf die Flüssigkeitsmenge der Monomeren, zugegeben. Initiator und Coinitiator sind in den oben angegebenen aliphatischen $C_3$- bis $C_6$-Kohlenwasserstoffen gelöst, bevorzugt in n-Hexan oder n-Butan. Die Flüssigkeitsströme werden einer Mischzone zugeführt, die sich in der Polymerisations- und ersten Zone befindet. Die Polymerisationszone macht räumlich 1 bis 60 Volumenprozent der ersten Zone aus, sie besteht im wesentlichen aus der Mischzone, in der die vier Flüssigkeitsströme zusammenkommen und in der die Polymerisation schlagartig in Gang kommt, und in der die polymerisierende Mischung frei nach unten fließt, sowie einer darunter befindlichen Zone aus Schaum, in der die in Kontakt gebrachten Reaktionsteilnehmer ausreagieren. Bevorzugt beträgt die Polymerisationszone 10 bis 50 Volumenprozent der ersten Zone. Die Zusammenführung der verschiedenen Flüssigkeitsströme und Vermischung der unterschiedlichen Lösungen und des Rückflusses erfolgt ohne Rührung, z.B. durch direktes Zusammenfließen der verschiedenen Flüssigkeitsströme, oder durch Vermischen in Mischdüsen oder durch Versprühen mittels Düsen.

Von der Mischzone fällt die polymerisierende Mischung auf die mit Schaum bedeckte Oberfläche der zweiten Zone, die sich vertikal unter der ersten Zone befindet. In dieser Schaumschicht aus reagierenden Reaktanden, die noch zur ersten Zone gehört, wird die Polymerisation beendet. Die entstehende Polymerlösung, die jetzt keine Dampfblasen mehr enthält und sich in der zweiten Zone sammelt wird kontinuierlich durch die zweite Zone nach unten abgezogen. Die Viskosität der Polymerlösungen in der zweiten Zone liegt bei dem erfindungsgemäßen Verfahren bevorzugt zwischen 2 und $5.10^4$, besonders bevorzugt zwischen 40 bis 500 Pas, gemessen nach ASTM D—1601. Aufgrund dieser Viskosität wird ein Vermischen mit dem Schaum aus der Polymerisationszone verhindert, so daß nach unten reine Lösung aus Isobutylenpolymerisat abgezogen werden kann.

Die mittlere Verweilzeit des Reaktionsgemischs in der Polymerisationszone beträgt im allgemeinen 0,1 bis 35, bevorzugt 1 bis 10 Minuten. Insbesondere beträgt die mittlere Verweilzeit in der Polymerisationszone 4 bis 8 Minuten. Die mittlere Verweilzeit des Reaktionsgemisches in der Mischzone, in der die vier Flüssigkeitsströme zusammenkommen und in der die Polymerisation in Gang kommt, beträgt 0,05 bis 0,6, bevorzugt 0,1 bis 0,5 Sekunden. Die Mischzone, unter der das Volumen der Mischelemente und der zur Oberfläche der 2. Zone hinfallende Produktstrom verstanden wird, macht räumlich 0,04 bis 0,5 Volumenprozent der ersten Zone aus. In dieser Mischzone können bereits Umsätze der Monomeren von 80 bis 90 Gew.-% erreicht werden. Die mittlere Verweilzeit ist definiert durch das Verhältnis des Volumens der Polymerisations- bzw. Mischzone zu dem im Mittel pro Zeitenheit durch die Polymerisations- bzw. Mischzone hindurchgetretene Produktvolumen aus Polymerisat, Lösung und Monomer.

Nach dem Austrag der Polymerisationslösung aus dem Reaktor wird der Initiator vorteilhafterweise mit Wasser oder Alkoholen inaktiviert. die Isolierung der isobutylenpolymerisats erfolgt nach bekannten Methoden durch Verdampfung des Lösungsmittels bei Temperaturen bis 260°C und Drücken von 0,1 bis 500 mbar. Dabei wird das Lösungsmittel zurückgewonnen. Nach entsprechender Reinigung kann es erneut im Polymerisationsverfahren eingesetzt werden.

Die mit der Erfindung erzielten Vorteile bestehen insbesondere darin, daß die Homo- oder Copolymerization beim Zusammentreffen der Monomer- und Initiatorlösung in hoher Konzentration außerhalb der in der zweiten Zone vorhandenen Polymerisatlösung schnell und praktisch vollständig abläuft, wodurch Molgewichte aus dem Gewichtsmittel $M_w$ von 9 500 bis 120 000 bei relativ hohen Temperaturen erreichbar sind. Ein weiterer Vorteil des erfindungsgemäßen Verfahrens ist dadurch bedingt, daß durch die sofortige kontinuierliche Polymerisation des zulaufenden Monomers sich nur sehr

kleine Mengen am reaktionsfähigen Material im Reaktor befindet und dadurch eine unkontrollierte Polymerisation größerer Monomerenmengen, insbesondere bei der Homopolymerisation des Isobutylens, verhindert wird.

Es ist auch ein Vorteil, daß nach erfindungemäßen Verfahren im Fall der Homopolymerisation des isobutylens ein Isobutylenumsatz zu Polyisobutylen von mehr als 99 Gewichtsprozent erreicht wird.

In den nachfolgend aufgeführten Beispielen beziehen sich die Prozentangaben, wenn nicht anders angegeben, jeweils auf das Gewicht.

Beispiel 1

Reinigung und Verflüssigung von Isobuten und Lösungsmittel (s. Fig.).

Gasförmiges Isobuten mit einem isobutengehalt von 99% aus der Druckstahlflasche 1 wurde zunächst im Reinigungsturm 3, der mit Molekularsieb auf Basis synthetischer Zeolithe Typ QMO5—564 der Fa. Grace mit einem Korndurchmesser von 1,6 bis 2,5 mm und der Porengröße $3\cdot10^{-10}$m (Å) gefüllt war, gereinigt und dann mitels des Dewar-Rückflußkühlers 5 in das kalibrierte Vorratsgefäß 7 kondensiert. Anschließend wurde in gleicher Weise gasförmiges Butan mit einem Gehalt von n-Butan von 99,5% aus der Druckstahlflasche 2 gereinigt und ebenfalls in das Vorratsgefäß 7 einkondensiert. Es wurde eine Mischung von flüssigem Isobuten und Butan mit 60 Vol-% Isobuten hergestellt. Durch ständiges Kühlen am Dewar-Rückflußkühler 5 wurde diese Mischung in flüssigem Zustand gehalten.

In gleicher Weise wurde ein flüssige Isobuten/Butan-Mischung im Vorratsgefäß 10 hergestellt.

Polymerisation

Über den Anschluß 12 wurde im Reaktionsgefäß 18 von 3,8 Liter Inhalt ein Druck von 500 mbar eingestellt. Dann wurde gleichzeitig das Isobuten/Butan-Gemisch aus dem Vorratsbehälter 7 sowie die 0,05 molare Lösung von $C_2H_5AlCl_2$ in n-Hexan aus dem Vorratsbehälter 13 und die 0,05 molare Lösung von t-Butylchlorid in n-Hexan aus dem Vorratsbehälter 14 durch Offnen der Hähne 6, 15 und 16 in die Mischzone 17 zugefahren. Die Zulaufgeschwindigkeit des flüssigen Isobuten/Butan-Gemisches betrug 8 Liter/Stunde (l/h), die der Initiator- und Coinitiator-Lösung jeweils 0,001 Mol/Stunde (mol/h) (0,127 g/Stunde (g/h) bzw. 0,0926 g/h t-Butylchlorid).

Die Polymerisation begann spontan bereits am Ort des Zusammentreffens der Lösungen in der Mischzone 17 und setzte sich im freien Fallen und in einer vertikal darunter sich ausbildenden Schaumschicht 21 fort, die zusammen mit der Mischzone die Polymerisationszone ausmacht. Bei fortschreitender Polymerisation bildete sich zunehmend eine vollkommen unbewegte, blasenfreie klare Polymerlösung 23 unterhalb der Schaumschicht aus, wobei der oberhalb der Polymerlösung 23 entstandene Raum des Reaktionsgefäßes 18 die erste Zone und der Raum unterhalb der Schaumschicht die zweite Zone darstellt. Bei Aufrechterhaltung eines Druckes von 500 mbar im Reaktionsgefäß stellte sich eine Temperatur an dem Meßstellen 19, 20 und 22 von −15°C ein. Nachdem das Reaktionsgefäß 18 bis zu ca. der Hälfte seiner Höhe mit Polymerlösung gefüllt war und sich eine Schaumschicht mit einer Höhe von ca. 5 cm ausgebildet hatte, wurde durch den Hahn 26 kontinuierlich soviel Polymerlösung in den Behälter 27, in dem ebenfalls über den Anschluß 24 ein Druck von 500 mbar eingestellt worden war, gefördert, daß eine konstante Füllhöhe im Reaktionsgefäß 18 aufrecht erhalten wurde. In der Austragsschleuse 27 wurde verdampfendes Butan laufend am Dewar-Rückflußkühler 25 wieder verflüssigt. Nach Füllung des Behälters 27 mit Polymerlösung wurde der Hahn 26 geschlossen und im Gefäß 27 Normaldruck oder ca. 0,02 bar $N_2$-Überdruck eingestellt, um dann über den Hahn 28 die Polymerlösung auszütragen. Nach Entleerung von Gefäß 27 wurde der Hahn 28 wieder geschlossen und wieder ein Druck von 500 mbar im Gefäß 27 eingestellt. Nun wurde wieder Hahn 26 geöffnet und kontinuierlich soviel Polymerlösung aus dem Reaktionsgefäß 18 in die Austragsschleuse 27 ausgetragen, daß wieder eine konstante Füllhöhe im Gefäß 18 gehalten wurde.

Während der Polymerisation wurden die Vorratsbehälter 7 und 10 abwechselnd an das Reaktionsgefäß 18 angeschlossen und nach Entleerung wieder mit Isobuten/Butan-Mischung aufgefüllt. Die kontinuierliche Polymerisation wurde auf diese Weise bis zu 10 Stunden aufrechterhalten. Die Isolierung des Isobutylenpolymerisats erfolgte durch Entgasung der ausgetragenen Polymerlösung bei 210°C und 0,3 mbar. Die Ergebnisse des Versuchs sind in der folgenden Tabelle 1 aufgeführt.

Die beschriebene Apparatur bestand, außer den Druckflaschen 1 und 2, aus Glasteilen. Die Polymerisation wurde unter Luftausschluß durchgeführt. Die Belüftung mit $N_2$-Gas erfolgte über die Anschlüsse 4, 8, 12, 24, 30 und 31.

Das Reaktionsgefäß 18 und die Austragsschleuse 27 war mit einem Mantel umgeben, durch den eine Flüssigkeit strömte, die die gleiche Temperatur hatte wie sie im Reaktionsgefäß an den Temperaturmeßstellen gemessen wurde.

Als Kühlmittel in den Dewar-Rückflußkühler 5, 9, 11 und 25 wurde ein Gemisch aus Trockeneis und Methanol verwendet.

Beispiel 2

Es wurde in der gleichen Apparatur gearbeitet wie sie im Beispiel 1 (Fig.) beschrieben ist. Die in den Vorratsbehältern 7 und 10 einkondensierte Isobuten/Butan-Mischung bestand zu 65 Vol-% aus Isobuten und zu 35 Vol-% aus Butan. In die Mischzone 17 des Reaktionsgefäßes 18 wurden kontinuierliche 6,65 l/h

dieses Isobuten/Butan-Gemisches zugefahren. Die Zulaufgeschwindigkeit der $C_2H_5AlCl_2$-Lösung und die der t-Butylchlorid-Lösung betrug jeweils 0,00 105 mol/h (= 0,133 g/h $C_2H_5AlCl_2$ bzw. 0,097 g/h t-Butylchlorid). Im Reaktionsgefäß wurde ein Druck von 700 mbar aufrechterhalten. Dabei stellte sich an den Temperaturmeßstellen 19, 20 und 22 eine Temperatur von −7°C ein. Unter diesen Bedingungen wurde die kontinuierliche Polymerisation über viele Stunden aufrechterhalten. Die Isolierung des Polyisobutylens erfolgte wie in Beispiel 1 beschrieben. Die Ergebnisse sind in Tab. aufgeführt.

Beispiel 3

Es wurde in der gleichen Apparatur polymerisiert wie sie in Beispiel 1 (Fig.) beschrieben ist. Die in den Vorratsbehältern 7 und 10 einkondensierte Isobuten/Butan-Mischung bestand aus 76 Vol-% Isobuten und aus 24 Vol-% Butan. In das Reaktionsgefäß 18 (Mischzone 17) wurden kontinuierlich 6,25 l/h dieses Isobuten/Butan-Gemisches zugefahren. Die Zulaufgeschwindigkeit der $C_2H_5AlCl_2$-Lösung und der t-Butylchlorid-Lösung in n-Hexan betrug jeweils 0,001 04 mol/h (=0,132 g/h $C_2H_5AlCl_2$ bzw. 0,096 g/h t-Butylchlorid). Im Reaktionsgefäß 18 wurde ein Druck von 1 020 mbar aufrechterhalten. Dabei stellte sich an den Temperaturmeßstellen 19, 20 und 22 eine Temperatur von 6°C ein. Unter diesen Bedingungen wurde die kontinuierliche Polymerisation über viele Stunden betrieben.

Die Isolierung des Polyisobutylens erfolgte wie in Beispiel 1. Die Ergebnisse sind in Tab. 1 aufgeführt.

| Beispiel | 1 | 2 | 3 |
|---|---|---|---|
| Austrag PIB kg/h | 3,0 | 2,7 | 3,1 |
| Raumzeitausbeute kg/PIB/h/l | 0,79 | 2,7 | 3,1 |
| Umsatz des Isobutens % | 99,9 | 99,9 | 99,9 |
| Aktivität g PIB/g $C_2H_5AlCl_2$/h | 21 483 | 20 255 | 23 470 |
| Molgwichte (nach der GPC-Methode): $\overline{M}_w$ | 59 000 | 45 600 | 27 500 |
| Heterogenitätsfaktor $\overline{M}_n/\overline{M}_w$ (nach GPC-Methode) | 4,5 | 5,2 | 4,3 |
| Viskosität der Polymerlösung in der 2. Zone in Pas | 74 | 86 | 105 |

PIB = Polyisobutylen
GPC = Gelpermeationschromatographie
$M_n$ = Molgewicht aus dem Zahlenmittel
$M_w$ = Molgewicht aus dem Gewichtsmittel

**Patentanspruch**

Verfahren zur kontinuierlichen Herstellung von Isobutylenpolymerisaten mit Molgewichten $\overline{M}_w$ von 9.500 bis 120.000 durch Homopolymerisation von Isobutylen oder Copolymerisaten von Isobutylen mit Isobutylen copolymisierbaren Verbindungen in aliphatischen $C_3$- bis $C_6$-Kohlenwasserstoffen als Lösungsmittel in Gegenwart von jeweils 0,001 bis 0,1 Gew.%, bezogen auf das Gewicht der Monomeren, eines im Lösungsmittel löslichen kationischen Polymerisationsinitiators und Coinitiators bei Temperaturen von −40 bis 40°C und Drücken von 0,01 bis 10 bar unter Luft- und Feuchtigkeitsausschluß, wobei die bei der Polymerisation verdampften Lösungsmittel und Monomere kontinuierlich abgezogen, durch Kühlung verflüssigt und in flüssigem Zustand als Rückfluß erneut der Polymerisationszone zugeführt werden, dadurch gekennzeichnet, daß die Flüssigkeitsströme aus Monomerlösung, die 40 bis 95 Gew.% der Monomeren enthält, Rückflüß, Coinitiatorlösung und getrennt davon der Strom aus Initiatorlösung zusammengeführt werden in eine Mischzone, die sich in der Polymerisations- und ersten Zone befindet und in welcher die polymerisierende Mischung frei nach unten fließt auf eine mit Schaum bedeckte Oberfläche einer zweiten Zone, wobei in der Schaumschicht, die noch zur ersten Zone gehört, die in Kontakt gebrachten Reaktionsteilnehmer ausreagieren, wobei die Zusammenführung und die Vermischung ohne Rührung und die Wärmeabfuhr durch Siedekühlung erfolgt, wobei die entstandene Polymerlösung in der zweiten Zone, die sich vertikal unter der ersten Zone befindet, gesammelt und wobei zum Schluß kontinuierlich durch die zweite Zone nach unten abgezogen wird.

**Revendication**

Procédé de préparation continue de polymères de l'isobutylène comportant des poids moléculaires $\overline{M}_p$

de 9.500 à 120.000 par l'homopolymérisation de l'isobutylène ou de copolymères de l'isobutylène et de composés copolymérisables avec l'isobutylène, dans des hydrocarbures en $C_3$ à $C_6$ servant de solvants, en présence de chaque fois 0,001 à 0,1% en poids, par rapport au poids des monomères, d'un coamorceur et d'un amorceur de polymérisation cationique soluble dans les solvants, à des températures variant de −40 à 40°C et sous des pressions de 0,01 à 10 bars, les monomères et le solvant évaporés pendant la polymérisation étant soutirés en continu, reliquéfiés par refroidissement et recyclés à l'état liquide comme reflux dans la zone de polymérisation, caractérisé en ce que l'on réunit les courant liquides de la solution du ou des monomères, d'une teneur en monomère(s) de 40 à 95% en poids, du reflux et de la solution de co-initiateur dans une zone de mélange qui se situe dans la première zone et de polymérisation et dans laquelle le mélange en cours de polymérisation s'écoule librement vers le bas sur une surface recouverte de mousse d'une seconde zone, si bien que les partenaires réactionnels amenés en contact finissement de réagir dans la couche de mousse qui appartient encoure à la première zone, où la réunion et le mélange s'éffectuent sans agitation et l'évacuation de chaleur s'effectue par refroidissement d'ébullition, où la solution de polymère formée dans la seconde zone, qui se situe verticalement sous le première zone, est collectée, de manière à être en fin de compte continuellement prélevée ou soutirée vers le bas à travers la seconde zone.

**Claim**

A process for the continuous preparation of an isobutylene polymer having a molecular weight Mw of from 9500 to 120,000 by homopolymerization of isobutylene or copolymerization of isobutylene with compounds which are copolymerizable with it, in an aliphatic $C_3$—$C_6$-hydrocarbon as the solvent, in the presence of, in each case, from 0.001 to 0.1% by weight, based on the weight of the monomers, of a cationic polymerization initiator and a coinitiator which are soluble in the solvent, at from −40 to 40°C under from 0.01 to 10 bar in the absence of air and of moisture, the solvents and monomers vaporized during the polymerization being taken off continuously, liquefied by cooling, and fed again into the polymerization zone as a liquid reflux, wherein the liquid stream of the monomer solution, containing 40—95% by weight of the monomers, the liquid streams of the reflux and of the coinitiator solution and the separate stream of the initiator solution are combined in a mixing zone located in the polymerization and first zone and in which the polymerizing mixture flows freely downwards to a foam-covered surface of a second zone, the reactants which have been brought into contact continue reacting to completion in the foam layer, which is still part of the first layer, combining and mixing are carried out without stirring and heat is removed by evaporative cooling, and the resulting polymer solution is collected in the second zone located vertically below the first zone and is finally taken off continuously through the second zone, in a downward direction.

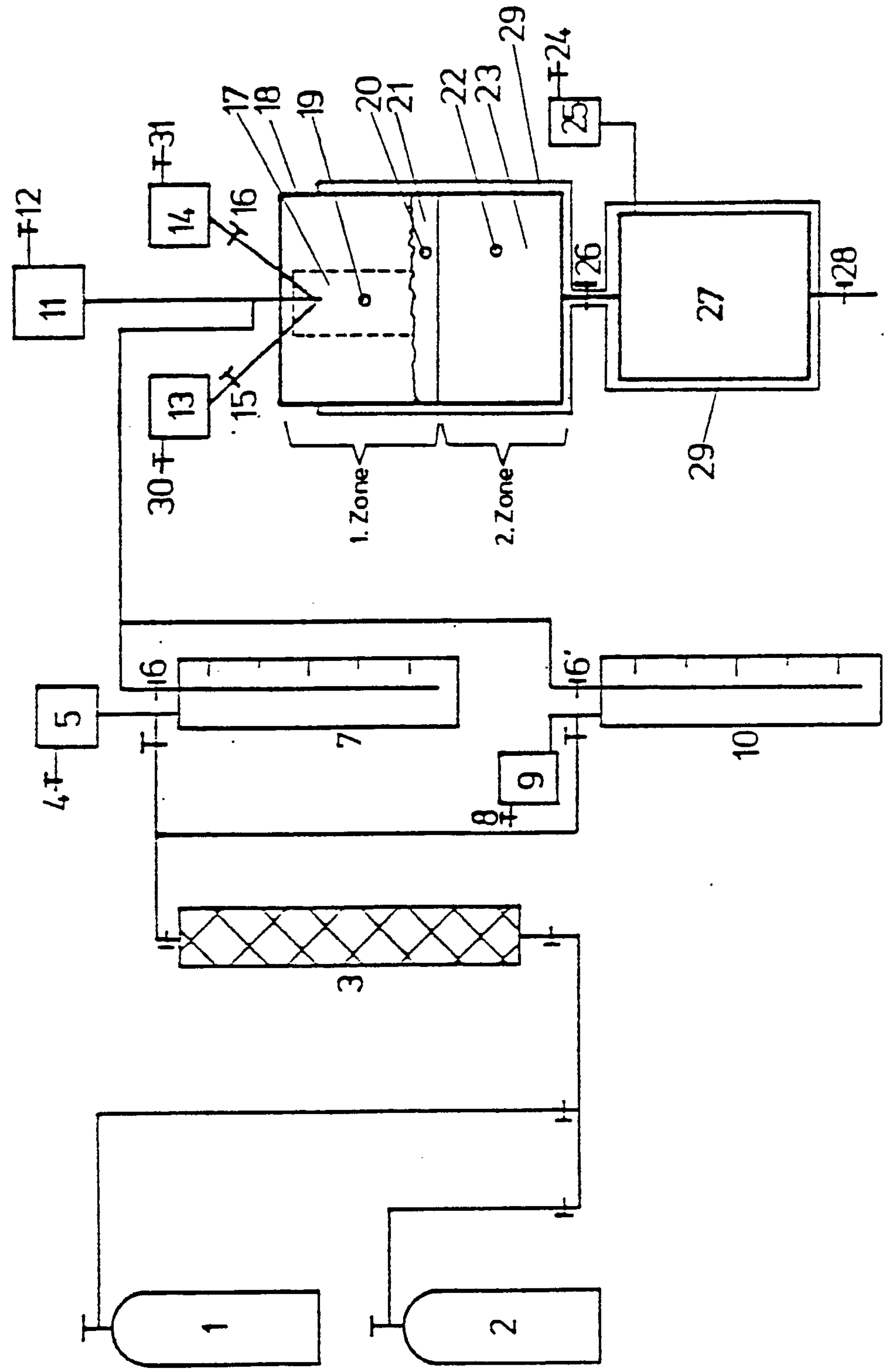
1. Zone
2. Zone